(19) Europäisches Patentamt
European Patent Office
Office européen des brevets

(11) **EP 3 029 121 A2**

(12) **EUROPEAN PATENT APPLICATION**

(43) Date of publication:
**08.06.2016 Bulletin 2016/23**

(51) Int Cl.:
*C09J 7/02* (2006.01)     *G02F 1/00* (2006.01)

(21) Application number: **15197435.9**

(22) Date of filing: **02.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.12.2014   JP 2014244122**

(71) Applicant: **NITTO DENKO CORPORATION**
**Ibaraki-shi, Osaka 567-8680 (JP)**

(72) Inventors:
• **YOSHIE, Satomi**
  **Osaka, 567-8680 (JP)**
• **ISHIGURO, Shigeki**
  **Osaka, 567-8680 (JP)**
• **YOSHIDA, Akiko**
  **Osaka, 567-8680 (JP)**

(74) Representative: **Sajda, Wolf E.**
**Meissner, Bolte & Partner GbR**
**Postfach 86 06 24**
**81633 München (DE)**

(54) **SURFACE PROTECTIVE PRESSURE-SENSITIVE ADHESIVE SHEET**

(57)     A surface protective pressure-sensitive adhesive sheet being less staining, less likely to trap air bubbles, and attachable by hand and having good wetting ability on an adherend and having an appropriate level of adherability and light peelability is provided, which includes a pressure-sensitive adhesive layer obtained by crosslinking a polymer-containing pressure-sensitive adhesive composition, wherein the pressure-sensitive adhesive layer has a surface that has a hardness of 0.1 MPa or more and a load curve with a minimum load of -0.3 $\mu$N or less as measured by nanoindentation, and which has a residual adhesive strength of 50 % or more, wherein the residual adhesive strength is calculated from the formula: residual adhesive strength (%) = 100 x [(adhesive strength B)/(adhesive strength A)], wherein adhesive strength A is the adhesive strength measured by a process including bonding a standard pressure-sensitive adhesive tape to the surface of an adherend and then peeling off the pressure-sensitive adhesive tape from the adherend surface, and adhesive strength B is the adhesive strength measured by a process including bonding the surface of the pressure-sensitive adhesive layer of the protective pressure-sensitive adhesive sheet to the surface of an adherend, then peeling off the protective pressure-sensitive adhesive sheet from the adherend surface, further bonding a standard pressure-sensitive adhesive tape to the adherend surface from which the protective pressure-sensitive adhesive sheet has been peeled off, and then peeling off the pressure-sensitive adhesive tape from the adherend surface.

**Description**

Background of the Invention

Field of the Invention

The invention relates to a surface protective pressure-sensitive adhesive sheet.

Description of the Related Art

With current widespread use of large-screen terminals such as mobile terminals, touch panel-type mobile terminals, and tablet terminals, pressure-sensitive adhesive sheets for protecting the surface of large screens (surface protective sheets) have come to be used. However, there is a problem in that air bubbles can be trapped by a pressure-sensitive adhesive sheet being attached to the surface of a large screen, and the pressure-sensitive adhesive (layer) of the pressure-sensitive adhesive sheet is required to have high wetting ability on the adherend.
When no longer needed, the attached pressure-sensitive adhesive sheet will be peeled off and removed. Therefore, the pressure-sensitive adhesive sheet is required to be lightly peelable for improved peeling workability.
Conventional pressure-sensitive adhesive sheets with high wetting ability and light peelability are produced using silicone-based pressure-sensitive adhesives. However, silicone-based pressure-sensitive adhesives are expensive and less economical and may cause staining with the silicone itself, which means that they are unsuitable for use in fields where staining can cause a serious problem, such as a process of manufacturing electronic components or the like.
On the other hand, the use of acrylic pressure-sensitive adhesives is disclosed (Patent Documents 1 to 3), which can be an alternative to the use of silicone-based pressure-sensitive adhesives. Unfortunately, acryl-based polymers in acrylic pressure-sensitive adhesives have the following problem. Acryl-based polymers have a C-C-C bond as a main component of the polymer skeleton and therefore have a structure in which free rotation of the bond in the polymer chain is restricted, so that the motion of the polymer molecule is restricted. Therefore, acrylic pressure-sensitive adhesives have a low wetting rate, are more likely to trap air bubbles and less likely to lease air bubbles, and thus are less likely to have good wetting ability.

Prior Art Documents

Patent Documents

Patent Document 1:     JP 2007-327 012 A
Patent Document 2:     JP 2010-248 489 A
Patent Document 3:     JP 2010-209 324 A

SUMMARY OF THE INVENTION

Problems to be Solved by the Invention

So far, whether or not a pressure-sensitive adhesive sheet has high wetting ability is determined by a sensory evaluation method such as a method that includes actually bonding a sample to an adherend and then visually observing how wetting spreads.
Conventional methods for checking wetting ability require actually bonding a sample to an adherend for the evaluation. In conventional methods, however, wetting ability can be affected by features, such as the thickness of the pressure-sensitive adhesive layer and the support and the rigidity of the support, other than those designed for the pressure-sensitive adhesive layer, and these factors can often cause errors.
In view of the above circumstances, it is therefore an object of the invention to provide a surface protective pressure-sensitive adhesive sheet being less staining, having good wetting ability on an adherend, being less likely to trap air bubbles, being attachable by hand, and having an appropriate level of adherability and light peelability.

Means for Solving the Problems

As a result of intensive studies to solve the above problems, the inventors have found the surface protective pressure-sensitive adhesive sheet described below and have finally accomplished the invention.

Specifically, the invention is directed to a surface protective pressure-sensitive adhesive sheet including a pressure-sensitive adhesive layer obtained by crosslinking a polymer-containing pressure-sensitive adhesive composition, wherein the pressure-sensitive adhesive layer has a surface that has a load curve with a minimum load of - 0.3 $\mu$N or less as measured by nanoindentation and has a hardness of 0.1 MPa or more as measured by nanoindentation, the surface protective pressure-sensitive adhesive sheet having a residual adhesive strength of 50 % or more, wherein the residual adhesive strength is calculated from the formula: residual adhesive strength (%) = 100 x [(adhesive strength B)/(adhesive strength A)], wherein adhesive strength A is the adhesive strength measured by a process including bonding a standard pressure-sensitive adhesive tape to the surface of an adherend and then peeling off the pressure-sensitive adhesive tape from the adherend surface, and adhesive strength B is the adhesive strength measured by a process including bonding the surface of the pressure-sensitive adhesive layer of the protective pressure-sensitive adhesive sheet to the surface of an adherend, then peeling off the protective pressure-sensitive adhesive sheet from the adherend surface, further bonding a standard pressure-sensitive adhesive tape to the adherend surface from which the protective pressure-sensitive adhesive sheet has been peeled off, and then peeling off the pressure-sensitive adhesive tape from the adherend surface.

In the surface protective pressure-sensitive adhesive sheet of the invention, the pressure-sensitive adhesive layer preferably has a gel fraction of 40 to 90 % by mass.

In the surface protective pressure-sensitive adhesive sheet of the invention, the pressure-sensitive adhesive layer is preferably formed on at least one side of a support.

The surface protective pressure-sensitive adhesive sheet of the invention is preferably for use on a display surface.

Effect of the Invention

The invention makes it possible to provide a surface protective pressure-sensitive adhesive sheet being less staining, having good wetting ability on an adherend, being less likely to trap air bubbles, being attachable by hand, and having an appropriate level of adherability and light peelability, and therefore is useful.

DETAILED DESCRIPTION OF THE PREFERRED EMBODIMENTS

Hereinafter, embodiments of the invention will be described in detail.

The surface protective pressure-sensitive adhesive sheet of the invention has a pressure-sensitive adhesive layer obtained by crosslinking a polymer-containing pressure-sensitive adhesive composition, in which the pressure-sensitive adhesive layer has a surface (pressure-sensitive adhesive surface) that has a load curve with a minimum load of -0.3 $\mu$N or less as measured by nanoindentation. In the load-displacement curve obtained by the nanoindentation measurement, the minimum load of the load curve may reflect surface tension, wetting ability, and other properties, and may be a measure of the adherend-gripping power of the pressure-sensitive adhesive layer (the ability of the pressure-sensitive adhesive layer to stick to the adherend or tackiness).

When this value (minimum load) is low, the polymer molecules in the pressure-sensitive adhesive layer can have high mobility to grip the adherend, which makes it possible to have good wetting ability. The feature that the minimum load of the load curve of the surface of the pressure-sensitive adhesive layer is -0.3 $\mu$N or less allows the surface protective pressure-sensitive adhesive sheet of the invention to have good wetting ability on the adherend and to be valuable.

The surface protective pressure-sensitive adhesive sheet of the invention having a pressure-sensitive adhesive layer obtained by crosslinking a polymer-containing pressure-sensitive adhesive composition also has the feature that the surface of the pressure-sensitive adhesive layer (pressure-sensitive adhesive surface) has a hardness of 0.1 MPa or more as measured by nanoindentation. If having a low hardness, the surface of the pressure-sensitive adhesive layer can have an adhesive strength too high for surface protection and can also be soft so that it can be more likely to trap air bubbles.

The feature that the surface of the pressure-sensitive adhesive layer has a hardness of 0.1 MPa or more as measured by nanoindentation allows the surface protective pressure-sensitive adhesive sheet of the invention to have a low controlled adhesive strength, to be very lightly peelable, to be less likely to trap air bubbles, and to be valuable.

The surface protective pressure-sensitive adhesive sheet of the invention having a pressure-sensitive adhesive layer obtained by crosslinking a polymer-containing pressure-sensitive adhesive composition has a residual adhesive strength of 50 % or more, wherein the residual adhesive strength is calculated from the formula: residual adhesive strength (%) = 100 x [(adhesive strength B)/(adhesive strength A)], wherein adhesive strength A is the adhesive strength measured by a process including bonding a standard pressure-sensitive adhesive tape to the surface of an adherend and then peeling off the pressure-sensitive adhesive tape from the adherend surface, and adhesive strength B is the adhesive strength measured by a process including bonding the surface of the pressure-sensitive adhesive layer of the protective pressure-sensitive adhesive sheet to the surface of an adherend, then peeling off the protective pressure-sensitive adhesive sheet from the adherend surface, further bonding a standard pressure-sensitive adhesive tape to the adherend surface from which the protective pressure-sensitive adhesive sheet has been peeled off, and then peeling off the pressure-sensitive adhesive tape from the adherend surface.

If the residual adhesive strength is as low as less than 50 %, the surface of an adherend to which the pressure-sensitive adhesive layer is bonded may remain stained, which may cause a defect in an operation process and therefore is not preferred. The feature that the residual adhesive strength is 50 % or more allows the surface protective pressure-sensitive adhesive sheet of the invention to be less staining to the surface of the adherend, to have less-staining properties and high handleability, and to be valuable.

In the invention, the term "adherend" may refer to any type of adherend, and the surface of the adherend may be in any state. The adherend may be, for example, a glass material, a polycarbonate resin, a polymethyl methacrylate resin, or the like. The resin may also be coated with any of various coating materials. Examples of the coating materials include anti-fingerprint coating materials and blue light cut coating materials.

Polymer

The surface protective pressure-sensitive adhesive sheet of the invention has a pressure-sensitive adhesive layer obtained by crosslinking a polymer-containing pressure-sensitive adhesive composition. The polymer in the pressure-sensitive adhesive composition may be of any type capable of undergoing a crosslinking reaction to form a pressure-sensitive adhesive layer. For example, an acrylic polymer, a urethane polymer, an epoxy polymer, a polyester, and a polyether polyol can be used advantageously. In particular, a polyester and a polyether polyol are preferred because using any of a polyester and a polyether polyol, the pressure-sensitive adhesive (layer) can be easily designed to have a small number of functional groups and a low adhesive strength, which makes it easy to obtain an easily peelable surface protective material.

Polyester

The polymer for use in the surface protective pressure-sensitive adhesive sheet of the invention may be a polyester, which is preferably obtained by polycondensation of a bifunctional or polyfunctional carboxylic acid component and a diol component. Polyester-based pressure-sensitive adhesives, which include a polyester, are useful for a variety of applications because they generally have a high level of electrical insulating properties, mechanical strength, bending fatigue strength, water and chemical resistance, and optical transparency, have almost no stretch, and can be made both thin and thick.

The polyester preferably includes at least a bifunctional or polyfunctional carboxylic acid component. The carboxylic acid component is more preferably derived from a dicarboxylic acid component having two carboxyl groups per molecule. The bifunctional or polyfunctional carboxylic acid component is preferably used, so that flexibility and cohesiveness can be achieved at the same time.

Examples of the dicarboxylic acid include, but are not limited to, sebacic acid derived from castor oil and dimer acids derived from oleic acid, erucic acid, or the like; and other dicarboxylic acids such as aliphatic or alicyclic dicarboxylic acids such as adipic acid, azelaic acid, 1,4-cyclohexanedicarboxylic acid, 4-methyl-1,2-cyclohexanedicarboxylic acid, dodecenyl succinic anhydride, fumaric acid, succinic acid, dodecanedioic acid, hexahydrophthalic anhydride, tetrahydrophthalic anhydride, maleic acid, maleic anhydride, itaconic acid, and citraconic acid; and terephthalic acid, isophthalic acid, orthophthalic acid, 1,5-naphthalenedicarboxylic acid, 2,6-naphthalenedicarboxylic acid, 4,4'-diphenyldicarboxylic acid, 2,2'-diphenyldicarboxylic acid, and 4,4'-diphenyl ether dicarboxylic acid.

In particular, dimer acids are preferred because they have low glass transition temperature, make it possible to design a flexible pressure-sensitive adhesive, and can provide good wetting ability. Dimer acids are also useful because they are not derived from petroleum (but derived from plants) and thus are environmentally friendly. These dicarboxylic acids may be used singly or in combination of two or more.

A monocarboxylic acid with one carboxyl group (making up less than 3 % by mass of all the carboxylic acids) or a tri- or polycarboxylic acid with three or more carboxyl groups (making up less than 25 % by mass of all the carboxylic acids) may also be used in addition to the dicarboxylic acid component. However, when a polyfunctional carboxylic acid such as a tricarboxylic acid is used, a network structure (three-dimensional crosslinked structure) can be formed to keep the adhesive strength of the pressure-sensitive adhesive layer (pressure-sensitive adhesive sheet) at a low level. Therefore, when high adherability (adhesion) is necessary, the tricarboxylic or polycarboxylic acid should preferably not be used.

The polyester also preferably includes a diol component. The diol component is more preferably derived from a compound having at least two hydroxyl groups per molecule. In particular, an aliphatic diol or a polyether glycol is preferably used. Using the diol, an easily rotatable ether bond can be introduced into the polymer, which can improve wetting ability and therefore is preferred.

In particular, the aliphatic diol is preferably an aliphatic diol having an alkylene group of 3 to 10 carbon atoms. An aliphatic diol with an alkylene group of less than 3 carbon atoms has a relatively low boiling point and thus can evaporate during the polymerization for the polyester, so that the viscosity can easily increase and the polymerization can be difficult to control. On the other hand, an aliphatic diol with an alkylene group of more than 10 carbon atoms is not preferred because it can easily crystallize and is disadvantageous in terms of cost.

Examples of the aliphatic diol having an alkylene group of 3 to 10 carbon atoms include, but are not limited to, aliphatic glycols such as 1,2-propylene glycol, 1,3-propanediol, 2-methyl-1,3-propanediol, 1,2-butanediol, 1,3-butanediol, 1,4-butanediol, 1,5-pentanediol, 1,6-hexanediol, 3-methyl-1,5-pentanediol, neopentyl glycol, diethylene glycol, dipropylene glycol, 2,2,4-trimethyl-1,5-pentanediol, 2-ethyl-2-butylpropanediol, 1,9-nonanediol, 2-methyloctanediol, 1,10-decanediol, 1,4-cyclohexanedimethanol, and 1,2-cyclohexanedimethanol. These diols may be used singly or in combination two or more.

The polyether glycol, which has an ether bond in the molecule, can introduce the ether bond together with an ester bond into the polymer chain of the polyester, so that the resulting polyester can have a structure in which bonds in the polymer chain are easy to freely rotate, and can have improved flexibility, which is more effective for wetting ability and thus is preferred.

As a non-limiting example, the use of a polyether glycol having hydroxyl groups at both ends can further increase the flexibility of the polymer chain and thus is preferred. Preferred examples of the polyether glycol having hydroxyl groups at both ends, which may have any number average molecular weight (Mn), include polyalkylene ether glycols such as polytetramethylene ether glycols (e.g., PTG-1000SN and PTG-1000SN(P) manufactured by Hodogaya Chemical Co., Ltd.) and polytrimethylene ether glycols; polyether polyols produced by copolymerization of 1 to 20 % by mole of 3-methyltetrahydrofuran and tetrahydrofuran (e.g., PTG-L1000, PTG-L2000, and PTG-L3500 manufactured by Hodogaya Chemical Co., Ltd.), and polyether glycols produced by copolymerization of neopentylglycol and tetrahydrofuran. These polyether glycols may be used singly or in combination of two or more.

The polyester can be obtained by polycondensation of the carboxylic acid component and the diol component. The molar ratio (OH/COOH) of the hydroxyl group of the diol component to the carboxyl group of the carboxylic acid component is preferably 1 or more, more preferably 1.02 to 3, even more preferably 1.04 to 2.60, further more preferably 1.06 to 2.40. If the molar ratio is less than 1, a carboxyl group-terminated polyester (polymer) will be produced after the polymerization, which may fail to be quickly crosslinked with a crosslinking agent (such as an isocyanate crosslinking agent) and may form a pressure-sensitive adhesive (layer) with insufficient holding power (cohesive strength) and thus is not preferred.

The polyester preferably has a weight average molecular weight (Mw) of 8,500 to 50,000, more preferably 8,800 to 45,000, even more preferably 9,000 to 43,000, further more preferably 10,000 to 38,000. If the weight average molecular weight is less than 8,500, air bubbles can easily form during a crosslinking reaction with a crosslinking agent (such as a polyfunctional isocyanate), and an appearance problem such as cissing or uneven thickness can be more likely to occur in a coating process due to low viscosity, which is not preferred. If the weight average molecular weight is more than 50,000, the resulting adhesive strength can be high, and the stability of the polymerization can decrease.

When the weight average molecular weight is in the above ranges, a short distance between crosslinking points and high cohesive strength can be achieved, which will make it possible to design a hard pressure-sensitive adhesive (with improved scratch resistance), to keep the adhesive strength low (low adherability and light peelability), and to suppress the trapping of air bubble (to achieve high wetting ability) and thus is preferred.

An additional component other than the carboxylic acid component and the diol component may be introduced into the polyester by polymerization or addition after the polymerization as long as it does not degrade the properties of the polyester for use in the pressure-sensitive adhesive layer according to the invention.

The polyester can be synthesized using any known polymerization method. The polymerization reaction (condensation polymerization) between the carboxylic acid component and the diol component may be performed using a conventionally known method with a solvent or under reduced pressure with no solvent.

Examples of a method of removing water produced by the polymerization (condensation) reaction include a method in which azeotropic dehydration is conducted using toluene or xylene, a method in which an inert gas is bubbled into a reaction system thereby ejecting produced water and monoalcohol out of the reaction system, together with the inert gas, and a method of distilling under reduced pressure.

It is possible to use, as a polymerization catalyst used in the polymerization (condensation) reaction, those used as a polymerization catalyst used in a conventional polyester, and examples of usable polymerization catalyst include, but are not limited to, various metal compounds such as titanium-based, tin-based, antimony-based, zinc-based and germanium-based compounds; and strong acid compounds such as p-toluenesulfonic acid and sulfuric acid.

Polyether polyol

The polymer for use in the surface protective pressure-sensitive adhesive sheet of the invention may be a polyether polyol. The polyether polyol may be obtained by addition polymerization of an alkylene oxide such as ethylene oxide, propylene oxide, or butylene oxide with an initiator such as water, propylene glycol, ethylene glycol, trimethylolpropane, pentaerythritol, bisphenols, or dihydoxybenzene. Examples of the polyether polyol include polyethylene glycol, polypropylene glycol, and polytetramethylene glycol.

The polyether polyol that may be used has a number average molecular weight (Mn) of about 100 to about 30,000, preferably 500 to 10,000. When the polyether polyol used has a number average molecular weight (Mn) in the above ranges, the resulting pressure-sensitive adhesive layer can have an appropriate level of hardness and flexibility for surface protection applications, which is a preferred mode. Polyether polyols with a branched polymer chain structure may also be used as appropriate. These polyether polyols may be used singly or in combination of two or more.

The polyether polyol can be synthesized using any known method.

Fatty acid ester

A fatty acid ester may also be used as a plasticizer component together with the polymer in the surface protective pressure-sensitive adhesive sheet of the invention. For example, the fatty acid ester is preferably, but not limited to, a plasticizing fatty acid ester additive such as a functional group-free fatty acid ester with a molecular weight of 200 to 700 (molar molecular weight : g/mole). If the fatty acid ester has a functional group such as a hydroxyl group, the functional group can be incorporated during crosslinking, so that the fatty acid ester may fail to impart flexibility and fail to be effective for wetting ability, which is not preferred. The fatty acid ester more preferably has a molecular weight of 220 to 600, even more preferably 240 to 500.

When a polyester is used as the polymer, there will be good compatibility between the fatty acid ester and the polyester, because the fatty acid ester as well as the polyester has an ester bond, so that even when a liquid material is added in a large amount, the bleeding out of the liquid material can be prevented due to the interaction between their ester bonds, which is preferred against staining properties (for anti-staining properties).

Even when another polymer such as a polyether polyol is used, the ether bond and the ester bond of the fatty acid ester can interact with each other to produce the same effect as in the case of the polyester, which is preferred. The addition of the fatty acid ester can increase the mobility of the polyester or the polyether polyol and dramatically improve the ability of the pressure-sensitive adhesive sheet (pressure-sensitive adhesive layer) according to the invention to wet the surface of the adherend, which is therefore preferred.

In addition, the fatty acid ester plays a role to widen the distance between crosslinking points in the polymer such as the polyester or the polyether polyol (a role to allow the polymer to swell), does not react with the polymer, crosslinking agents, and other components, and can reduce the steric hindrance of the polymer, increase the mobility of the polymer molecule, and improve the wetting ability. In this regard, if the fatty acid ester has a molecular weight of less than 200, it will have a relatively low boiling point and thus can evaporate in a drying process, which can make it impossible to produce the effects of the fatty acid ester. On the other hand, the fatty acid ester with a molecular weight of more than 700 may have reduced compatibility with the polymer, may bleed out, and may stain the adherend.

The fatty acid ester may be, for example, isopropyl myristate, isopropyl palmitate, methyl linoleate, or a dibasic acid ester such as an adipic acid ester, a sebacic acid ester, or a phthalic acid ester. These fatty acid esters may be used singly or in combination of two or more. If a fatty acid ester with a functional group such as a hydroxyl group is used, the functional group can be incorporated during a crosslinking reaction, so that the fatty acid ester may fail to impart flexibility and fail to be effective for wetting ability. The use of other additives with no ester bond is not preferred because such additives can have lower compatibility with the polymer such as the polyester or the polyether polyol and can bleed out to cause staining.

The content of the fatty acid ester may be 10 to 150 parts by mass, preferably 20 to 150 parts by mass, more preferably 30 to 140 parts by mass, even more preferably 40 to 130 parts by mass, based on 100 parts by mass of the polymer such as the polyester or the polyether polyol. If the content is less than 10 parts by mass, the resulting pressure-sensitive adhesive layer may be less likely to have high wetting ability. If the content is more than 150 parts by mass, a reduction in scratch resistance may occur. Therefore, such contents are not preferred.

Crosslinking agent

The surface protective pressure-sensitive adhesive sheet of the invention preferably contains a crosslinking agent. Using the crosslinking agent, the pressure-sensitive adhesive composition can be subjected to a crosslinking reaction to form a pressure-sensitive adhesive layer. The crosslinking agent may be any conventionally known crosslinking agent, examples of which include an isocyanate crosslinking agent such as a polyvalent isocyanurate or a polyfunctional isocyanate compound, a polyfunctional melamine compound, a polyfunctional epoxy compound, a polyfunctional oxazoline compound, a polyfunctional aziridine compound, and a metal chelate compound.

These crosslinking agents may be used singly or in combination of two or more. In a particularly preferred mode, a conventionally known isocyanate crosslinking agent such as a polyvalent isocyanurate or a polyfunctional isocyanate is used in order to obtain a transparent pressure-sensitive adhesive layer, a pressure-sensitive adhesive sheet (pressure-sensitive adhesive layer) with a high gel fraction, or an elastic modulus suitable for pressure-sensitive adhesives.

Examples of the polyvalent isocyanurate include a polyisocyanurate compound of hexamethylene diisocyanate. Use of the polyvalent isocyanurate is effective since it is possible to achieve an object of obtaining transparency and high gel fraction of the obtained pressure-sensitive adhesive layer. It is also possible to use commercially available products of the polyvalent isocyanurate and specific examples thereof include "DURANATE TPA-100" (trade name, manufactured by Asahi Kasei Chemicals Corporation), and "CORONATE HK", "CORONATE HX" and "CORONATE 2096" (trade names, manufactured by Nippon Polyurethane Industry Co., Ltd.). These polyvalent isocyanurate may be used singly or in combination two or more.

As the polyfunctional isocyanate compound, a compound having at least two isocyanate groups in the molecule is preferably used, and a compound having three or more isocyanate groups in the molecule is more preferably used without any particular limitation. Specific examples may include aliphatic polyisocyanates, alicyclic polyisocyanates, and aromatic polyisocyanates. These polyfunctional isocyanate compound may be used singly or in combination two or more.

Examples of the aliphatic polyisocyanates include tetramethylene diisocyanates such as 1,2-ethylene diisocyanate, 1,2-tetramethylene diisocyanate, 1,3-tetramethylene diisocyanate and 1,4-tetramethylene diisocyanate; hexamethylene diisocyanates such as 1,2-hexamethylene diisocyanate, 1,3-hexamethylene diisocyanate, 1,4-hexamethylene diisocyanate, 1,5-hexamethylene diisocyanate, 1,6-hexamethylene diisocyanate and 2,5-hexamethylene diisocyanate; and 2-methyl-1,5-pentane diisocyanate, 3-methyl-1,5-pentane diisocyanate and lysin diisocyanate.

Examples of the alicyclic polyisocyanates include isophorone diisocyanate; cyclohexyl diisocyanates such as 1,2-cyclohexyl diisocyanate, 1,3-cyclohexyl diisocyanate and 1,4-cyclohexyl diisocyanate; cyclopentyl diisocyanates such as 1,2-cyclopentyl diisocyanate and 1,3-cyclopentyl diisocyanate; hydrogenated xylylene diisocyanate, hydrogenated tolylene diisocyanate, hydrogenated diphenylmethane diisocyanate, hydrogenated tetramethylxylene diisocyanate and 4,4'-dicyclohexylmethane diisocyanate.

Examples of the aromatic polyisocyanates include 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate, 4,4'-diphenyletherdiisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, 3,3'-dimethoxydiphenyl-4,4'-diisocyanate, xylylene-1,4-diisocyanate and xylylene-1,3-diisocyanate.

Examples of the polyfunctional isocyanate compound that may be used include aliphatic, alicyclic, and aromatic polyisocyanates as mentioned above, and dimers or trimers of aromatic aliphatic polyisocyanates, such as dimers or trimers of diphenylmethane diisocyanate, a reaction product of trimethylolpropane and tolylene diisocyanate, a reaction product of trimethylolpropane and hexamethylene diisocyanate, polymethylene polyphenyl isocyanate, polyether-polyisocyanate, polyester-polyisocyanate, and other polymers.

It is also possible to use commercially available products as the polyfunctional isocyanate compound, and specific examples thereof include "CORONATE L" (trade name, manufactured by Nippon Polyurethane Industry Co., Ltd.) as a trimer adduct of trimethylolpropane and tolylene diisocyanate, and "CORONATE HL" (trade name, manufactured by Nippon Polyurethane Industry Co., Ltd.) as a trimer adduct of trimethylolpropane and hexamethylene diisocyanate.

Examples of the polyfunctional melamine compound include methylated methylolmelamine and butylated hexamethylolmelamine, and examples of the polyfunctional epoxy compound include diglycidylaniline and glycerin diglycidyl ether.

The type and content of the crosslinking agent are not restricted. The pressure-sensitive adhesive sheet preferably contains the crosslinking agent in such an amount that the formed pressure-sensitive adhesive layer can have a gel fraction of 40 to 90 % by mass, more preferably 45 to 88 % by mass, even more preferably 50 to 85 % by mass. The pressure-sensitive adhesive layer with a gel fraction of less than 40 % by mass can be soft and more likely to trap air bubbles. On the other hand, the pressure-sensitive adhesive layer with a gel fraction of more than 90 % by mass can be less wetting and have a lower wetting rate.

When the polyester or the polyether polyol is used as the polymer, the content of the crosslinking agent is preferably 1 to 30 parts by mass, more preferably 2 to 25 parts by mass, even more preferably 5 to 20 parts by mass, based on 100 parts by mass of the polymer. If the content is less than 1 part by mass, the resulting pressure-sensitive adhesive layer may fail to have improved holding power (cohesive strength) and may have reduced heat resistance. If the content is more than 30 parts by mass, the crosslinking reaction may excessively proceed to reduce the adhesive strength. Therefore, such contents are not preferred.

A crosslinking catalyst may also be used as appropriate to efficiently control the gel fraction of the pressure-sensitive adhesive layer in the surface protective pressure-sensitive adhesive sheet of the invention. Examples of the catalyst include tetra-n-butyl titanate, tetraisopropyl titanate, butyltin oxide, dioctyltin dilaurate, and acetylacetone iron(III). These catalysts may be used singly or in combination of two or more.

The content of the catalyst is preferably, but not limited to, 0.01 to 1 part by mass, more preferably 0.05 to 0.5 parts by mass, based on 100 parts by mass of the polymer such as the polyester or the polyether polyol. If the content is less than 0.01 parts by mass, the addition of the catalyst may fail to be effective. If the content is more than 1 part by mass, a significantly short shelf-life may be obtained to reduce the stability of coating. Therefore, such contents are not preferred.

In order to prolong the shelf life, acetyl acetone, methanol, methyl orthoacetate, and the like may be also blended properly as a retarder.

In addition to the raw materials described above, a common additive such as a tackifier, a hydrolysis resistant agent, a silane coupling agent, a surface lubricant, a leveling agent, an antioxidant, a polymerization inhibitor, an antistatic agent, an ultraviolet absorber, a light stabilizer, a release modifier, a softening agent, a filler, a colorant such as a pigment or a dye, an age resistor, or a surfactant may be used in the pressure-sensitive adhesive layer (pressure-sensitive adhesive) of the surface protective pressure-sensitive adhesive sheet of the invention as long as the properties of the pressure-sensitive adhesive layer (pressure-sensitive adhesive) are not impaired.

The thickness of the pressure-sensitive adhesive layer (after drying) may be properly selected, but the thickness is preferably, for example, about 1 $\mu$m to 100 $\mu$m, more preferably about 3 $\mu$m to 80 $\mu$m, and particularly preferably about 5 $\mu$m to 60 $\mu$m. If the thickness of the pressure-sensitive adhesive layer is thinner than 1 $\mu$m, it becomes difficult to obtain sufficient adhesive strength, and the pressure-sensitive adhesive sheet (pressure-sensitive adhesive layer) itself cannot be fixed to an adherend and may tend to be easily peeled. If the thickness exceeds 100 $\mu$m, the adhesive strength is increased over time so that the pressure-sensitive adhesive sheet is hard to be peeled, and therefore it is not preferable. The pressure-sensitive adhesive layer may be any of a mono layer form or a layered form.

Support

In the surface protective pressure-sensitive adhesive sheet of the invention, the pressure-sensitive adhesive layer is preferably formed on at least one side of a support. When the pressure-sensitive adhesive sheet has a support, the sheet can have a higher level of durability, mechanical strength, handleability, and protective performance, which is preferred.

An intermediate layer or an undercoat layer may also be provided with no problem as long as the properties of the support in the surface protective pressure-sensitive adhesive sheet of the invention are not impaired.

The support (backing) may be of any conventionally known type, such as a plastic film, a paper sheet, a porous material such as a nonwoven fabric, or any of various other supports (backings). In view of durability or the like, a plastic film is preferably used for surface protection applications. The plastic film may be, for example, a film of polyolefin such as polyethylene, polypropylene, poly-1-butene, poly-4-methyl-1-pentene, an ethylene-propylene copolymer, an ethylene-1-butene copolymer, an ethylene-vinyl acetate copolymer, an ethylene-ethyl acrylate copolymer, or an ethylene-vinyl alcohol copolymer, a film of polyester such as polyethylene terephthalate (PET), polyethylene naphthalate, or polybutylene terephthalate, a polyacrylate film, a polystyrene film, a film of polyamide such as nylon 6, nylon 6,6, or partially aromatic polyamide, a polyvinyl chloride film, a polyvinylidene chloride film, or a polycarbonate film. A support made of PET, polylactic acid, cellulose, or the like produced using a plant-derived raw material is also advantageously used.

In the support, if necessary, various additives used in a conventional backing for a pressure-sensitive adhesive tape (support), such as ultraviolet absorbers, photostabilizers, antioxidants, fillers, pigments and dyes can be used.

If necessary, the surface of the support may be subjected to a common surface treatment for improving its adhesion to the pressure-sensitive adhesive layer, such as a chromic acid treatment, exposure to ozone, exposure to flame, exposure to high-voltage electric shock, an ionizing radiation treatment, or other chemical or physical oxidation treatments, or a coating treatment with a priming agent. In order for various pressure-sensitive adhesive layers to be removably formed on the support, the support may also be coated with a release agent such as a silicone resin or a fluororesin.

The thickness of the support may be appropriately selected depending on the material or shape of the support. For example, the support preferably has a thickness of 1,000 $\mu$m or less, more preferably about 1 $\mu$m to about 1,000 $\mu$m, even more preferably about 2 $\mu$m to about 500 $\mu$m, further more preferably about 3 $\mu$m to about 300 $\mu$m, most preferably about 5 mm to about 250 $\mu$m.

The pressure-sensitive adhesive layer may be formed using any conventionally known method. For example, the pressure-sensitive adhesive layer may be formed according to a known method for producing a pressure-sensitive adhesive tape (pressure-sensitive adhesive sheet), such as a method that includes applying the pressure-sensitive adhesive composition (a solution of the pressure-sensitive adhesive composition in a solvent or a hot melt thereof) to the support and drying the composition to form a pressure-sensitive adhesive layer; a method that includes applying the pressure-sensitive adhesive composition to the support, drying the composition to form a pressure-sensitive adhesive composition layer, and further crosslinking it to form a pressure-sensitive adhesive layer; a method that includes forming a pressure-sensitive adhesive layer on a release liner by coating and then moving (transferring) the pressure-sensitive adhesive layer onto the support; a method of applying a pressure-sensitive adhesive layer-forming material to the support by extrusion; a method of extruding a support and a pressure-sensitive adhesive layer in two or more layers; or a method of laminating a single pressure-sensitive adhesive layer onto the support.

The pressure-sensitive adhesive layer may also be formed using a method of coextruding a thermoplastic resin support and a pressure-sensitive adhesive layer in two or more layers by inflation method or T-die method. As used herein, the term " surface protective pressure-sensitive adhesive sheet" is intended to include a pressure-sensitive adhesive film, a pressure-sensitive adhesive tape, a double-sided pressure-sensitive adhesive tape (pressure-sensitive adhesive layer alone, backing-free double-sided pressure-sensitive adhesive tape, a double-sided pressure-sensitive adhesive tape containing a support(backing)), and the like.

Before use, a release liner or liners may be attached to one or both sides of the pressure-sensitive adhesive layer for its storage. The pressure-sensitive adhesive layer may be a stack (laminate) of two or more layers made of the same or different materials and bonded together. The pressure-sensitive adhesive sheet may also be designed to have two or more support layers and three or more pressure-sensitive adhesive layers (double-sided pressure-sensitive adhesive tape).

As a method for applying the pressure-sensitive adhesive composition (solution), a conventionally known method may be employed, and examples of the method include roll coating, gravure coating, reverse roll coating, roll brush coating, air knife coating, spray coating, and extrusion coating with a die coater or the like.

The release liner may be any conventionally-known appropriate release liner. For example, the release liner to be used may include a backing (a backing for a release liner) and a release coating layer that is formed on at least one side of the backing by a coating treatment with a parting agent (release agent) for imparting releasability, such as a silicone release agent, a fluoride release agent, a long-chain alkyl release agent, or a fatty acid amide release agent. The backing for the release liner may have a single-layer or multilayer structure.

Any of various thin materials such as plastic films, paper sheets, foamed products, and metal foils may be used as the backing for release liner. A plastic film is particularly preferred. Examples of the material for the plastic film include polyester such as polyethylene terephthalate, polyolefin such as polypropylene or ethylene-propylene copolymer, and thermoplastic resin such as polyvinyl chloride.

The thickness of the backing for release liner may be properly selected in accordance with the purpose.

The formation of the pressure-sensitive adhesive layer is not particularly limited, but the temperature for drying after application of the pressure-sensitive adhesive composition (solution) may be normally 60 °C to 150 °C and preferably 70 °C to 140 °C.

Applications

The surface protective pressure-sensitive adhesive sheet of the invention will have general-purpose applications such as surface protective sheets for electronic device displays, protective sheets for electric appliances, and packaging sheets.

EXAMPLES

Hereinafter, the invention will be described in more detail with reference to examples, which, however, are not intended to limit the invention. In the examples, "parts" and "%" mean "parts by mass" and "% by mass," respectively, unless otherwise specified. Tables 1 and 2 show the components of pressure-sensitive adhesive compositions and the results of evaluation of pressure-sensitive adhesive layers (surface protective pressure-sensitive adhesive sheets).

Example 1

A four-necked separable flask equipped with a stirrer, a thermometer, and a vacuum pump was charged with 60 g of a dimer acid (Pripol 1025 (trade name) manufactured by Croda, 621 in molecular weight), 140 g of a polyether glycol of 1,000 in Mn (PTG1000SN(P) (trade name) manufactured by Hodogaya Chemical Co., Ltd., 1,000 in number average molecular weight), and 0.2 g of dibutyltin oxide (manufactured by Wako Pure Chemical Industries, Ltd.) as a polymerization catalyst. The dimer acid as an acid component and the polyether glycol of 1,000 in Mn as a diol component were in a molar ratio of 1.00 : 1.32. The mixture was heated to 200°C with stirring under a reduced-pressure atmosphere (0.002 MPa), and then this temperature was maintained. The reaction was continued for about 5 hours to produce a polyester polymer. The polymer had a weight average molecular weight (Mw) of 30,000.

To 100 parts of the polymer were added 30 parts of isopropyl palmitate (manufactured by Wako Pure Chemical Industries, Ltd., 299 in molecular weight) and 15 parts of a polyisocyanate (CORONATE HX (trade name) manufactured by Nippon Polyurethane Industry Co., Ltd.) as a crosslinking agent. Toluene as a solvent was added to the mixture to adjust the viscosity to a level suitable for easy application, so that a polyester-based pressure-sensitive adhesive composition was obtained.

The pressure-sensitive adhesive composition was applied to a 38 μm-thick polyethylene terephthalate (PET) film (Lumirror 38S10 (trade name) manufactured by PANAC Co., Ltd.) as a backing so that a pressure-sensitive adhesive layer with a dry thickness of 10 μm (after drying) could be formed. The pressure-sensitive adhesive composition was then dried at 120 °C for 3 minutes to form a composition layer.

Subsequently, the composition layer was attached to the release-treated surface of a release-treated polyethylene terephthalate (PET) film (Diafoil MRE #38 (trade name) manufactured by Mitsubishi Plastics, Inc.) as a support. The resulting laminate was then allowed to stand at 40°C for 3 days to give a pressure-sensitive adhesive sheet (surface protective pressure-sensitive adhesive sheet) having the pressure-sensitive adhesive layer formed on the support.

Example 2

A pressure-sensitive adhesive sheet was obtained by the same process as in Example 1, except that the amount of isopropyl palmitate (manufactured by Wako Pure Chemical Industries, Ltd., 299 in molecular weight) was changed to 50 parts based on 100 parts of the polymer.

Example 3

A pressure-sensitive adhesive sheet was obtained by the same process as in Example 1, except that the amount of isopropyl palmitate (manufactured by Wako Pure Chemical Industries, Ltd., 299 in molecular weight) was changed to 100 parts based on 100 parts of the polymer.

Example 4

A pressure-sensitive adhesive sheet was obtained by the same process as in Example 1, except that isopropyl palmitate (manufactured by Wako Pure Chemical Industries, Ltd., 299 in molecular weight) was replaced by dioctyl adipate (DOA (trade name) manufactured by DAIHACHI CHEMICAL INDUSTRY CO., LTD., 371 in molecular weight).

Example 5

A pressure-sensitive adhesive sheet was obtained by the same process as in Example 1, except that isopropyl palmitate (manufactured by Wako Pure Chemical Industries, Ltd., 299 in molecular weight) was replaced by methyl linoleate (VEGE-SOL CM (trade name) manufactured by KANEDA Co., Ltd., 295 in molecular weight).

Example 6

A pressure-sensitive adhesive sheet was obtained by the same process as in Example 5, except that the amount of methyl linoleate (VEGE-SOL CM (trade name) manufactured by KANEDA Co., Ltd., 295 in molecular weight) was changed to 50 parts based on 100 parts of the polymer.

Example 7

A pressure-sensitive adhesive sheet was obtained by the same process as in Example 2, except that isopropyl palmitate (manufactured by Wako Pure Chemical Industries, Ltd., 299 in molecular weight) was replaced by diisodecyl adipate (DIDA (trade name) manufactured by DAIHACHI CHEMICAL INDUSTRY CO., LTD., 427 in molecular weight).

Example 8

A polyether polyol mixture was obtained by mixing 85 g of a polyether polyol (PREMINOL S3011 (trade name) manufactured by ASAHI GLASS CO., LTD., 10,000 in number average molecular weight Mn), 13 g of a polyether polyol (SANNIX GP3000 (trade name) manufactured by Sanyo Chemical Industries, Ltd., 3,000 in number average molecular weight Mn), and 2 g of a polyether polyol (SANNIX GP1000 (trade name) manufactured by Sanyo Chemical Industries, Ltd., 1,000 in number average molecular weight Mn).

To 100 parts of the polyether polyol mixture was added 18 parts of a polyisocyanate (CORONATE HX (trade name) manufactured by Nippon Polyurethane Industry Co., Ltd.) as a crosslinking agent. Ethyl acetate as a solvent was added to the resulting mixture to adjust the viscosity to a level suitable for easy application, so that a polyether polyol-based pressure-sensitive adhesive composition was obtained.

The pressure-sensitive adhesive composition was applied to a 38-$\mu$m-thick polyethylene terephthalate (PET) film (Lumirror 38S10 (trade name) manufactured by PANAC Co., Ltd.) as a backing so that a pressure-sensitive adhesive layer with a dry thickness of 10 $\mu$m (after drying) could be formed. The pressure-sensitive adhesive composition was then dried at 120 °C for 3 minutes to form a composition layer.

Subsequently, the composition layer was attached to the release-treated surface of a release-treated polyethylene terephthalate (PET) film (Diafoil MRE #38 (trade name) manufactured by Mitsubishi Plastics, Inc.) as a support. The resulting laminate was then allowed to stand at 40°C for 3 days to give a pressure-sensitive adhesive sheet having the pressure-sensitive adhesive layer formed on the support.

Example 9

A pressure-sensitive adhesive sheet was obtained by the same process as in Example 8, except that 30 parts of isopropyl palmitate (manufactured by Wako Pure Chemical Industries, Ltd., 299 in molecular weight) was further added to 100 parts of the polyether polyol mixture.

Comparative Example 1

A product (DW-100 (trade name) manufactured by Nitto Denko Corporation) including a silicone (Si)-based pressure-sensitive adhesive was provided as a surface protective sheet.

Comparative Example 2

A four-necked separable flask equipped with a stirrer, a thermometer, and a vacuum pump was charged with 98 g of a dimer acid (Pripol 1009 (trade name) manufactured by Croda, 567 in molecular weight), 102 g of a diol component (Pripol 2033 (trade name) manufactured by Croda, 537 in molecular weight), and 0.2 g of dibutyltin oxide (manufactured by Wako Pure Chemical Industries, Ltd.) as a polymerization catalyst. The dimer acid as an acid component and the diol component were in a molar ratio of 1.00 : 1.10. The mixture was heated to 200 °C with stirring under a reduced-pressure atmosphere (0.002 MPa), and then this temperature was maintained. The reaction was continued for about 5 hours to produce a polyester polymer. The polymer had a weight average molecular weight (Mw) of 28,000.

To 100 parts of the polymer was added 15 parts of a polyisocyanate (CORONATE HX (trade name) manufactured by Nippon Polyurethane Industry Co., Ltd.) as a crosslinking agent. Toluene as a solvent was added to the mixture to adjust the viscosity to a level suitable for easy application, so that a polyester-based pressure-sensitive adhesive composition was obtained.

The pressure-sensitive adhesive composition was applied to a 38-$\mu$m-thick polyethylene terephthalate (PET) film (Lumirror 38S10 (trade name) manufactured by PANAC Co., Ltd.) as a backing so that a pressure-sensitive adhesive layer with a dry thickness of 10 $\mu$m (after drying) could be formed. The pressure-sensitive adhesive composition was then dried at 120 °C for 3 minutes to form a composition layer.

Subsequently, the composition layer was attached to the release-treated surface of a release-treated polyethylene terephthalate (PET) film (Diafoil MRE #38 (trade name) manufactured by Mitsubishi Plastics, Inc.) as a support. The resulting laminate was then allowed to stand at 40 °C for 3 days to give a pressure-sensitive adhesive sheet having the pressure-sensitive adhesive layer formed on the support.

Comparative Example 3

A pressure-sensitive adhesive sheet was obtained by the same process as in Comparative Example 2, except that 50 parts of methyl linoleate (VEGE-SOL CM (trade name) manufactured by KANEDA Co., Ltd., 295 in molecular weight) was further added to 100 parts of the polymer.

Comparative Example 4

A four-necked flask equipped with a stirring blade, a thermometer, a nitrogen gas inlet tube, and a reflux condenser was charged with 200 g of 2-ethylhexyl acrylate, 8 g of 2-hydroxyethyl acrylate, 0.4 g of 2,2'-azobisisobutyronitrile as a polymerization initiator, and 312 g of ethyl acetate. Nitrogen gas was introduced into the flask while the mixture was gently stirred. The mixture was then subjected to a polymerization reaction for about 6 hours while the temperature of the liquid in the flask was kept at around 65°C, so that a solution of an acryl-based polymer (40 % by mass) was obtained. The acryl-based polymer had a weight average molecular weight (Mw) of 500,000.

To 100 parts of the acryl-based polymer solution were added 4 parts of a polyisocyanate (CORONATE L (trade name) manufactured by Nippon Polyurethane Industry Co., Ltd.) as a crosslinking agent and 0.2 parts of dibutyltin dilaurate (a 1 % by mass solution in ethyl acetate) as a crosslinking catalyst, so that a pressure-sensitive adhesive composition was obtained.

The pressure-sensitive adhesive composition was applied to a 38-$\mu$m-thick polyethylene terephthalate (PET) film (Lumirror 38S10 (trade name) manufactured by PANAC Co., Ltd.) as a backing so that a pressure-sensitive adhesive layer with a dry thickness of 10 $\mu$m (after drying) could be formed. The pressure-sensitive adhesive composition was then dried at 120 °C for 3 minutes to form a composition layer.

Subsequently, the composition layer was attached to the release-treated surface of a release-treated polyethylene terephthalate (PET) film (Diafoil MRE #38 (trade name) manufactured by Mitsubishi Plastics, Inc.) as a support. The resulting laminate was then allowed to stand at 40 °C for 3 days to give a pressure-sensitive adhesive sheet having the pressure-sensitive adhesive layer formed on the support.

Comparative Example 5

A pressure-sensitive adhesive sheet was obtained by the same process as in Comparative Example 4, except that 50 parts of methyl linoleate (VEGE-SOL CM (trade name) manufactured by KANEDA Co., Ltd., 295 in molecular weight) was further added to 100 parts of the polymer.

Comparative Example 6

A four-necked separable flask equipped with a stirrer, a thermometer, and a vacuum pump was charged with 60 g of a dimer acid (Pripol 1025 (trade name) manufactured by Croda, 621 in molecular weight), 140 g of a polyether glycol of 1,000 in Mn (PTG1000SN(P) (trade name) manufactured by Hodogaya Chemical Co., Ltd.), and 0.2 g of dibutyltin oxide (manufactured by Wako Pure Chemical Industries, Ltd.) as a polymerization catalyst. The dimer acid as an acid component and the polyether glycol of 1,000 in Mn as a diol component were in a molar ratio of 1.00 : 1.32. The mixture was heated to 200°C with stirring under a reduced-pressure atmosphere (0.002 MPa), and then this temperature was maintained. The reaction was continued for about 5 hours to produce a polyester polymer. The polymer had a weight average molecular weight (Mw) of 30,000.

To 100 parts of the polymer was added 4 parts of a polyisocyanate (CORONATE HX (trade name) manufactured by Nippon Polyurethane Industry Co., Ltd.) as a crosslinking agent. Toluene as a solvent was added to the mixture to adjust the viscosity to a level suitable for easy application, so that a polyester-based pressure-sensitive adhesive composition was obtained.

The pressure-sensitive adhesive composition was applied to a 38-$\mu$m-thick polyethylene terephthalate (PET) film (Lumirror 38S10 (trade name) manufactured by PANAC Co., Ltd.) as a backing so that a pressure-sensitive adhesive layer with a dry thickness of 10 $\mu$m (after drying) could be formed. The pressure-sensitive adhesive composition was then dried at 120 °C for 3 minutes to form a composition layer.

Subsequently, the composition layer was attached to the release-treated surface of a release-treated polyethylene terephthalate (PET) film (Diafoil MRE #38 (trade name) manufactured by Mitsubishi Plastics, Inc.) as a support. The resulting laminate was then allowed to stand at 40 °C for 3 days to give a pressure-sensitive adhesive sheet having the pressure-sensitive adhesive layer formed on the support.

Comparative Example 7

A pressure-sensitive adhesive sheet was obtained by the same process as in Comparative Example 6, except that the polyisocyanate (CORONATE HX (trade name) manufactured by Nippon Polyurethane Industry Co., Ltd.) as a crosslinking agent was added in an amount of 15 parts.

Table 1

| Components | Polymer | Additive | | Crosslinking agent |
|---|---|---|---|---|
| | Type | Type | Amount (parts) | Amount (parts) |
| Example 1 | PRIPOL1025 *PTG-1000SN(P) | Isopropyl palmitate | 30 | 15 |
| Example 2 | PRIPOL 1025*PTG-1000SN(P) | Isopropyl palmitate | 50 | 15 |
| Example 3 | PRIPOL1025*PTG-1000SN(P) | Isopropyl palmitate | 100 | 15 |
| Example 4 | PRIPOL1025*PTG-1000SN(P) | Dioctyl adipate | 30 | 15 |
| Example 5 | PRIPOL1025*PTG-1000SN(P) | Methyl linoleate | 30 | 15 |
| Example 6 | PRIPOL1025*PTG-1000SN(P) | Methyl linoleate | 50 | 15 |
| Example 7 | PRIPOL1025*PTG-1000SN(P) | Diisodecyl adipate | 50 | 15 |
| Example 8 | Polyether polyol mixture | - | - | 18 |
| Example 9 | Polyether polyol mixture | Isopropyl palmitate | 30 | 18 |
| Comparative Example 1 | Silicone-based pressure-sensitive adhesive | - | - | - |
| Comparative Example 2- | PRIPOL1009*PRIPOL2033 | - | - | 15 |
| Comparative Example 3 | PRIPOL 1009*PRIPOL2033 | Methyl linoleate | 50 | 15 |
| Comparative Example 4 | Acryl-based polymer | - | - | 4 |
| Comparative Example 5 | Acryl-based polymer | Methyl linoleate | 50 | 4 |
| Comparative Example 6 | PRIPOL1025*PTG-1000SN(P) | - | - | 4 |
| Comparative Example 7 | PRIPOL1025*PTG-1000SN(P) | - | - | 15 |

Note: The symbol (-) in the table indicates that no additive or crosslinking agent is used.

Methods for measurement and evaluation

The methods for measurement and evaluation of the polymer and the pressure-sensitive adhesive layer for use in the invention and the surface protective pressure-sensitive adhesive sheet are shown below.

Weight average molecular weight

The weight average molecular weight (Mw) was measured as follows: about 0.2 g of each polyester was collected on a petri dish, and the solvent was removed by drying at 120 °C for 2 hours. Then, 0.01 g of the polyester layer on the petri dish was weighed, which was added to 10 g of tetrahydrofuran (THF) and left for 24 hours for dissolution. The obtained solution was subjected to gel permeation chromatography (GPC), and the weight average molecular weight (Mw) of each polyester was measured based on the calibration curve produced using standard polystyrene.

Conditions for measurement of weight average molecular weight

Apparatus name: HLC-8220GPC, manufactured by Tosoh Corporation
Test piece concentration: 0.1 % by weight (THF solution)
Test piece injection amount: 20 $\mu$l
Eluent: THF
Flow rate: 0.300 ml/min
Measurement (column) temperature: 40 °C
Column: Test piece column; TSKguardcolumn SuperHZ-L (1 column)+TSKgel SuperHZM-M (2 columns), reference column; TSKgel SuperH-RC (1 column), manufactured by Tosoh Corporation
Detector: Differential refractometer (RI)

Number average molecular weight

The number average molecular weight was measured under the same conditions using the same system as in the measurement of the weight average molecular weight.

Gel fraction of pressure-sensitive adhesive layer

An about 0.1 g piece was cut from the pressure-sensitive adhesive layer obtained in each of the examples and the comparative examples. The cut piece sample was wrapped in a Teflon (registered trademark) sheet whose weight was known, and the total weight was measured. The wrapped sample was allowed to stand in toluene at 23°C for 7 days, so that the sol fraction was extracted from the sample. Subsequently, the sample was dried at 120°C for 2 hours, and the dry weight was measured. The gel fraction was calculated from the following formula:

$$\text{gel fraction (\%)} = [(\text{the weight after drying - the weight of the Teflon sheet})/(\text{the weight before drying - the weight of the Teflon sheet})] \times 100$$

The gel fraction of the pressure-sensitive adhesive layer is preferably 40 to 90 % by mass, more preferably 45 to 88 % by mass, even more preferably 50 to 85 % by mass. If the gel fraction is less than 40 % by mass, the glue (pressure-sensitive adhesive layer) can be soft and more likely to trap air bubbles. On the other hand, if the gel fraction is more than 90 % by mass, the glue (pressure-sensitive adhesive layer) can be less wetting and have a low wetting rate.

Nanoindentation measurement

The surface of the pressure-sensitive adhesive layer was subjected to a nanoindentation measurement under the conditions below using a nanoindenter TriboIndenter manufactured by Hysitron, Inc.

Indenter used: Berkovich (triangular pyramid type)
Measurement mode: single indentation measurement
Measurement temperature: 25 °C
Indentation depth: 1,000 nm

Hardness

The load-displacement curve was obtained by the nanoindentation measurement of the surface of the pressure-sensitive adhesive layer. The hardness [MPa] was calculated by dividing the maximum load of the load-displacement curve by the projected area of the indenter on the sample at the time of indentation.

The surface of the pressure-sensitive adhesive layer should have a hardness of 0.1 MPa or more, preferably 0.15 MPa or more, more preferably 0.2 MPa or more. If the surface of the pressure-sensitive adhesive layer has a low hardness of less than 0.1 MPa, the pressure-sensitive adhesive sheet (pressure-sensitive adhesive layer) can have too high an adhesive strength for surface protection and also can have a soft pressure-sensitive adhesive layer surface, so that it can be more likely to trap air bubbles, which is not preferred.

### Minimum load of load curve

The load-displacement curve was obtained by the nanoindentation measurement of the surface of the pressure-sensitive adhesive layer. The minimum value of the load curve was calculated as the minimum load ($\mu$N).
The minimum load of the load curve of the surface of the pressure-sensitive adhesive layer should be -0.3 $\mu$N or less, preferably -0.35 $\mu$N or less, more preferably - 0.4 $\mu$N or less. If the minimum load of the load curve is more than -0.3 $\mu$N, the polymer molecules in the pressure-sensitive adhesive layer can have low mobility and weak adherend-gripping power (low tackiness to the adherend), which can make it impossible to provide good wetting ability and is not preferred.

### Adhesive strength

A 25-mm-wide piece was cut from the pressure-sensitive adhesive sheet obtained in each of the examples and the comparative examples. The pressure-sensitive adhesive surface of the cut piece of the pressure-sensitive adhesive sheet was bonded to the non-tin surface of an alkali glass plate (manufactured by Matsunami Glass Ind., Ltd.). The 180° peel adhesive strength (N/25 mm) of the piece was then measured with a tension compression tester (AG-IS (product name) manufactured by SHIMADZU CORPORATION) under the following conditions.
Tension rate: 300 mm/minute
Measurement conditions: temperature 23 $\pm$ 2°C, humidity 65 $\pm$ 5 %RH
In this regard, the adhesive strength to the non-tin surface (glass surface) of the alkali glass plate (manufactured by Matsunami Glass Ind., Ltd.) is preferably 0.1 N/25 mm or less, more preferably 0.08 N/25 mm or less, even more preferably 0.06 N/25 mm or less. If the adhesive strength is more than 0.1 N/25 mm, the resulting pressure-sensitive adhesive sheet can be difficult to peel off or fail to have light peelability, and specifically, it can have high adhesive strength (peel strength) and low workability when peeled off from the surface of a recently developed large-screen display after it is attached to the surface, which is not preferred.

### Residual adhesive strength

### Adhesive strength A

An optical transparent pressure-sensitive adhesive sheet (CS9662LS (trade name) manufactured by Nitto Denko Corporation) with a polyethylene terephthalate (PET) backing was used as a standard pressure-sensitive adhesive tape, which was attached to the non-tin surface of an alkali glass plate (manufactured by Matsunami Glass Ind., Ltd.) as an adherend and pressure-bonded to the adherend surface with a 2 kg roller moving back and forth once in an atmosphere at a temperature of 23 °C and a humidity of 50 %. Thirty minutes after the pressure bonding, the 180° peel adhesive strength A (N/25 mm) of the standard pressure-sensitive adhesive tape was measured with a tension compression tester (AG-IS (product name) manufactured by SHIMADZU CORPORATION) under the following conditions.
Tension rate: 300 mm/minute
Measurement conditions: temperature 23 $\pm$ 2 °C, humidity 65 $\pm$ 5 %RH

### Adhesive strength B

The surface of the pressure-sensitive adhesive layer (adhesive face) of the surface protective pressure-sensitive adhesive sheet obtained in each of the examples and the comparative examples was bonded to the non-tin treatment surface of an alkali glass plate (manufactured by Matsunami Glass Ind., Ltd.) as an adherend (which was a new adherend surface different from the adherend surface for the pressure-sensitive adhesive A), and then stored under the conditions of 60 °C and 90 %RH for 1 week.
The protective pressure-sensitive adhesive sheet was then peeled off at a tension rate of 300 mm/minute from the glass plate. Subsequently, a new optical pressure-sensitive adhesive sheet (CS9662LS (trade name) manufactured by Nitto Denko Corporation) with a PET backing was used as a standard pressure-sensitive adhesive tape, attached to the glass surface (adherend surface) exposed after the removal of the protective pressure-sensitive adhesive sheet, and pressure-bonded to the adherend surface with a 2 kg roller moving back and forth once in an atmosphere at a temperature of 23°C and a humidity of 50 %. Thirty minutes after the pressure bonding, the 180° peel adhesive strength B (N/25 mm) of the standard pressure-sensitive adhesive tape was measured with a tension compression tester (AG-IS (product name) manufactured by SHIMADZU CORPORATION) under the following conditions.
Tension rate: 300 mm/minute

Measurement conditions: temperature 23 ± 2°C, humidity 65 ± 5 %RH

The residual adhesive strength (%) was calculated by substituting the resulting adhesive strengths A and B into the formula below and evaluated. The larger residual adhesive strength indicates that the surface protective pressure-sensitive adhesive sheet obtained in each example is less staining on the adherend (glass in this case) when bonded to the adherend.

$$\text{Residual adhesive strength (\%)} = 100 \times [(\text{the adhesive strength B})/(\text{the adhesive strength A})]$$

In this regard, the residual adhesive strength is preferably 50 % or more, more preferably 60 % or more, even more preferably 70 % or more, further more preferably 80 % or more. The pressure-sensitive adhesive sheet obtained with a residual adhesive strength of 50 % or more is less staining (has less-staining properties), can be prevented from leaving stains on adherend, and will not cause any defect in a process after the removal of it, which are advantageous features.

Wetting ability

A 25-mm-wide, 70-mm-long piece was cut from the pressure-sensitive adhesive sheet obtained in each of the examples and the comparative examples. The surface of the pressure-sensitive adhesive layer (adhesive face) of the cut piece was gently dropped onto the non-tin treatment surface of an alkali glass plate (manufactured by Matsunami Glass Ind., Ltd.), and a video of the spreading pressure-sensitive adhesive surface area was taken for one minute with a camera. The wetting rate ($cm^2$/second) was calculated through the observation and analysis of the video and used for the evaluation of the wetting ability.

The wetting rate on the glass plate (the rate of wetting of the glass surface) is preferably 10 $cm^2$/second or more, more preferably 10.5 $cm^2$/second or more, even more preferably 11 $cm^2$/second or more. The pressure-sensitive adhesive sheet obtained with a wetting rate of 10 $cm^2$/second or more has high wetting ability on adherend and therefore is preferred. If having a wetting rate of less than 10 $cm^2$/second, the pressure-sensitive adhesive sheet can be more likely to trap air bubbles when bonded to the surface of a display and can have poor workability, which is not preferred.

(Presence or absence of occurrence (trapping) of air bubbles)

During the evaluation of the wetting ability, whether or not wetting occurred without trapping of air bubbles was visually observed for the evaluation of the ability to release air bubbles.

×: Air bubbles are trapped during the evaluation of wetting ability (air bubbles are more likely to be trapped).
○: No air bubbles are trapped during the evaluation (air bubbles are less likely to be trapped).

Table 2

| Evaluation results | Gel fraction [wt%] | Minimum load [μN] of load curve | Hardness [MPa] | Wetting rate [cm²/sec] | Likelihood of trapping air bubbles | | Adhesive strength [N/25 mm] | Residual adhesive strength [%] |
|---|---|---|---|---|---|---|---|---|
| Example 1 | 76 | -0.311 | 0.214 | 11.0 | Low likelihood | ○ | 0.023 | 81 |
| Example 2 | 66 | -0.489 | 0.110 | 17.2 | Low likelihood | ○ | 0.019 | 82 |
| Example 3 | 56 | -0.398 | 0.116 | 21.3 | Low likelihood | ○ | 0.016 | 83 |
| Example 4 | 75 | -0.448 | 0.195 | 11.9 | Low likelihood | ○ | 0.025 | 86 |
| Example 5 | 74 | -0.419 | 0.232 | 14.1 | Low likelihood | ○ | 0.021 | 81 |

(continued)

| Evaluation results | Gel fraction [wt%] | Minimum load [$\mu$N] of load curve | Hardness [MPa] | Wetting rate [cm$^2$/sec] | Likelihood of trapping air bubbles | | Adhesive strength [N/25 mm] | Residual adhesive strength [%] |
|---|---|---|---|---|---|---|---|---|
| Example 6 | 70 | -1.298 | 0.222 | 17.4 | Low likelihood | ○ | 0.010 | 84 |
| Example 7 | 75 | -0.428 | 0.204 | 11.9 | Low likelihood | ○ | 0.024 | 84 |
| Example 8 | 81 | -0.317 | 0.480 | 11.1 | Low likelihood | ○ | 0.023 | 95 |
| Example 9 | 69 | -0.374 | 0.357 | 12.5 | Low likelihood | ○ | 0.010 | 95 |
| Comparative Example 1 | - | -0.324 | 0.128 | 17.0 | Low likelihood | ○ | 0.021 | 45 |
| Comparative Example 2 | 93 | -0.218 | 0.256 | 5.6 | High likelihood | × | 0.089 | 84 |
| Comparative Example 3 | 66 | -0.707 | 0.048 | 17.3 | High likelihood | × | 0.010 | 86 |
| Comparative Example 4 | 95 | -0.395 | 0.077 | 1.9 | High likelihood | × | 0.075 | 76 |
| Comparative Example 5 | 66 | -1.129 | 0.009 | 8.6 | High likelihood | × | 0.004 | 78 |
| Comparative Example 6 | 67 | -0.421 | 0.029 | 5.4 | High likelihood | × | 0.145 | 70 |
| Comparative Example 7 | 92 | -0.213 | 0.256 | 8.5 | Low likelihood | ○ | 0.047 | 74 |
| Note: The symbol (-) in the table indicates that no evaluation is performed. | | | | | | | | |

The results in Table 2 show that pressure-sensitive adhesive sheets having high wetting ability, being less likely to trap air bubbles, having good light-peelability, and being suitable for surface protection applications are obtained in all the examples where the minimum load of the load curve of the pressure-sensitive adhesive layer surface and the hardness of the pressure-sensitive adhesive layer surface are in the desired ranges as measured by nanoindentation and the residual adhesive strength is also in the desired range.

In contrast, it is apparent that the surface protective sheet in Comparative Example 1, which includes a silicone-based pressure-sensitive adhesive, causes staining of the adherend, has a low residual adhesive strength, and is not suitable for use on electronic devices. It is also apparent that the pressure-sensitive adhesive sheets in Comparative Examples 2 to 7, which are not designed to satisfy the given conditions (minimum load, hardness, and residual adhesive strength), do not have a satisfactory level of all other properties in contrast to the examples according to the invention.

**Claims**

1. A surface protective pressure-sensitive adhesive sheet comprising:

 - a pressure-sensitive adhesive layer obtained by crosslinking a polymer-containing pressure-sensitive adhesive composition, wherein
 the pressure-sensitive adhesive layer has a surface that has a load curve with a minimum load of -0.3 $\mu$N or less as measured by nanoindentation and has a hardness of 0.1 MPa or more as measured by nanoindentation, the surface protective pressure-sensitive adhesive sheet having a residual adhesive strength of 50 % or more, wherein the residual adhesive strength is calculated from the formula: residual adhesive strength (%) = 100 x [(adhesive strength B)/(adhesive strength A)], wherein adhesive strength A is an adhesive strength measured by a process comprising bonding a standard pressure-sensitive adhesive tape to a surface of an adherend and then peeling off the pressure-sensitive adhesive tape from the adherend surface, and adhesive strength B is an adhesive strength measured by a process comprising bonding a surface of the pressure-sensitive adhesive layer of the protective pressure-sensitive adhesive sheet to a surface of an adherend, then peeling off the protective pressure-sensitive adhesive sheet from the adherend surface, further bonding a standard pressure-sensitive adhesive tape to the adherend surface from which the protective pressure-sensitive adhesive sheet has been peeled off, and then peeling off the pressure-sensitive adhesive tape from the adherend surface.

2. The surface protective pressure-sensitive adhesive sheet according to claim 1, wherein the pressure-sensitive adhesive layer has a gel fraction of 40 to 90 % by mass.

3. The surface protective pressure-sensitive adhesive sheet according to claim 1 or 2, wherein the pressure-sensitive adhesive layer is formed on at least one side of a support.

4. The surface protective pressure-sensitive adhesive sheet according to any one of claims 1 to 3, which is for use on a display surface.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007327012 A
- JP 2010248489 A
- JP 2010209324 A